# EUROPÄISCHE PATENTANMELDUNG

(11) **EP 0 600 272 A1**
(43) Veröffentlichungstag der Anmeldung: **08.06.1994**
(21) Anmeldenummer: 93118166.3
(22) Anmeldetag: 10.11.1993
(51) Int. Cl.: H02G 3/26, H02K 5/22, B60R 16/02

(54) **Elektromotor, insbesondere Kommutatormotor**

(30) Priorität: 01.12.1992 DE 4240381
(71) Anmelder: Licentia Patent-Verwaltungs-GmbH, D-60596 Frankfurt (DE)
(72) Erfinder: Kopyciok, Martina, Dipl.-Ing., D-26419 Schortens (DE)
(74) Vertreter: Vogl, Leo, Dipl.-Ing.

(57) **Zusammenfassung**

Bei Elektromotoren, insbesondere bei Kommutatormotoren werden die Anschlußlitze (11) aus einer Öffnung des Motorgehäuses herausgeführt und zu einem kundenspezifisch ausgebildeten Steckergehäuse gebündelt geleitet. Eine Beschädigung dieser Anschlußlitze (11) durch Reibung an den Kanten oder an dem Motorgehäuse wird erfindungsgemäß dadurch vermieden, daß das Litzenschutzelement (27) aus einem länglichen, U-förmigen Bodengehäuse (29) mit in Längsrichtung durchgehenden Führungskanälen besteht, welches über die Anschlußlitze (11) stülpbar und durch einen Deckel (31) verschließbar ist, und daß in dem Bodengehäuse (29) neben dem Kanalschacht (33) für die Anschlußlitze (11) mindestens ein Kanalschachtabschnitt (35) für einen einzelnen Anschlußlitz (37) vorgesehen ist, welches durch die offene Längsseite des U-förmigen Bodengehäuses (29) verschließbaren Deckel (31) festklemmbar ist. Das Litzenschutzelement (27) ist leicht montier- und demontierbar und wird durch Festklemmen nur einer einzelnen Anschlußlitze (37) gleichzeitig in seiner Lage sicher fixiert.

## Beschreibung

Die Erfindung betrifft einen Elektromotor, insbesondere einen Kommutatormotor der im Oberbegriff des Patentanspruchs 1 angegebenen Art.

Es sind bereits Elektromotore mit außen an den Motorgehäusen angeordneten kundenabhängigen Steckergehäusen bekannt, welche mit den Enden von mehreren von den Wicklungen, Kohlebürsten und sonstigen elektrischen Bauelementen kommenden Anschlußlitzen fest verbunden sind. Hierbei werden die Anschlußlitze aus Öffnungen der Motorgehäuse bzw. der Lagerschilde herausgeführt, wobei deren freie Enden mit dem Steckergehäuse verbunden sind. Bei bekannten Elektromotoren werden die außerhalb des Motorgehäuses verlaufenden, einzelnen Anschlußlitze durch einen Kabelbinder lose gebündelt. Hierbei wird aber nicht vermieden, daß einzelne Anschlußlitze durch Rütteln des Elektromotors an den Oberflächen und scharfen Kanten des Elektromotors reiben und daher beschädigt werden können. Diese Beschädigung kann dadurch vermieden werden, daß die Anschlußlitze außerhalb des Motorgehäuses von einem an diesem sich abstützenden Litzenschutzelement umgeben sind. Dieses Litzenschutzelement besteht aus einem langen Isolierschlauchstück, welches eine Beschädigung der Anschlußlitze verhindert. Die Montage dieses langen Isolierschlauchstückes ist aber sehr aufwendig, da die Anschlußlitze durch das Schlauchstück geschoben werden müssen. Dieses Litzenschutzelement hat außerdem den Nachteil , daß eine Verschiebung des Isolierschlauchstückes auf den Anschlußlitzen nicht vermieden werden kann. Auch ist eine Zugentlastung der Anschlußlitze hierbei nicht gegeben.

Der Erfindung liegt die Aufgabe zugrunde, einen Elektromotor, insbesondere einen Kommutatormotor zu schaffen, bei dem die außerhalb des Motorgehäuses zu einem kundenspezifischen Steckergehäuse geführten Anschlußlitze einfach und sicher durch ein Litzenschutzelement geschützt werden, welches einfach herstell-, montier- und arretierbar ist. Diese Aufgabe wird durch die im Patentanspruch 1 gekennzeichnete Erfindung gelöst.

Die Anschlußlitze werden außerhalb des Motorgehäuses durch ein einfaches und leicht zu montierendes Litzenschutzelement sicher geschützt. Außerdem kann durch Festklemmen nur eines Anschlußlitzes in dem Litzenschutzelement dieses Litzenschutzelement gleichzeitig in seiner Lage fixiert werden. Weiterhin kann das Litzenschutzelement aufgrund seiner Demontage auch jederzeit wiederverwendet werden.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen:
- Figur 1: eine Seitenansicht auf einen Kommutatormotor,
- Figur 2: das Litzenschutzelement mit aufgeklapptem Deckel,

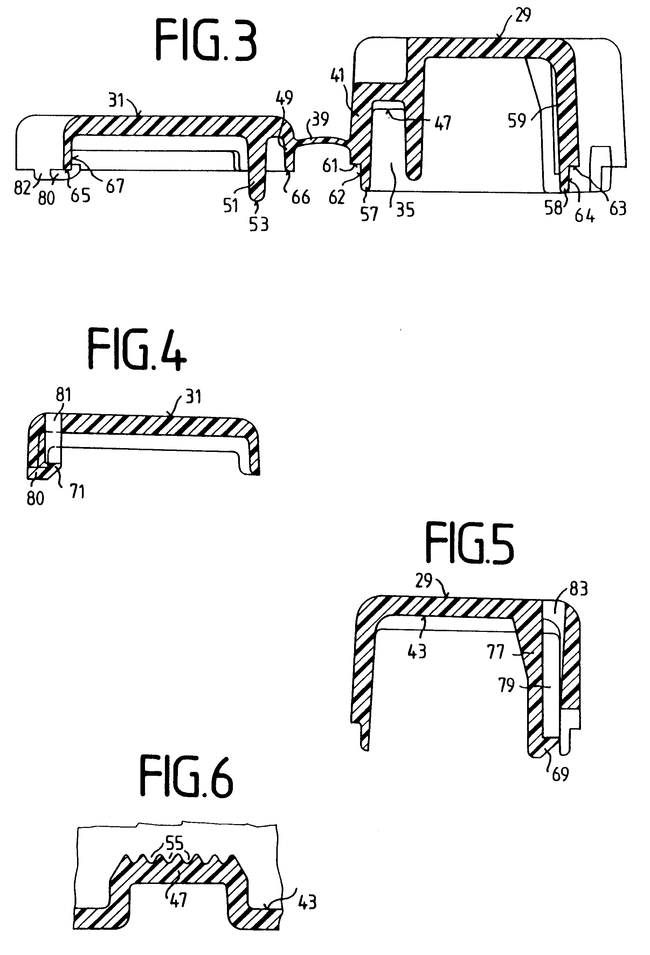

- Figur 3: einen Schnitt durch das Litzenschutzelement in aufgeklappter Darstellung und
- Figuren 4 bis 6: Einzelheiten aus Figur 3.

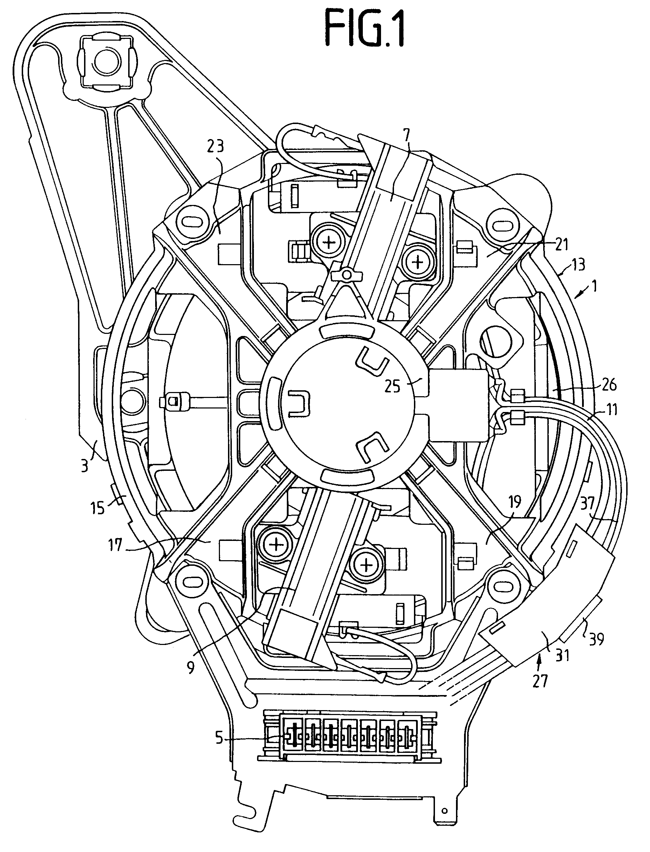

Die Figur 1 zeigt einen Kommutatormotor 1 mit einem außen an dem Motorgehäuse 3 angeordneten, kundenabhängigen Steckergehäuse 5, welches mit den Enden von mehreren von den Wicklungen, Kohlebürsten 7, 9 und sonstigen elektrischen Bauelementen kommenden Anschlußlitzen 11 fest verbunden ist. Das Motorgehäuse 3 besteht in bekannter Weise aus einem zylindrischen Mantelgehäuseteil und stirnseitig an diesem angeordneten, offenen Lagerschilden, von denen in der Figur 1 nur ein Lagerschild 13 dargestellt ist. Dieses Lagerschild 13 weist einen mit dem Mantelgehäuseteil zu verbindenden Außenring 15 auf, welcher über Verbindungsstreben 17, 19, 21, 23 mit einemzentrisch angeordneten Lagerteil 25 für die Rotorwelle fest verbunden ist. Die Anschlußlitze 11 werden aus einer Öffnung 26 zwischen den Verbindungsstreben 19 und 21 herausgeführt und verlaufen außerhalb des Motorgehäuses 3 bzw. des Lagerschildes 13 zu dem Steckergehäuse 5. Um ein Reiben der Anschlußlitze 11 an den Kanten und/oder der Oberfläche des Lagerschildes 13 bzw. des Motorgehäuses 3 zu verhindern, werden die außerhalb des Motorgehäuses verlaufenden Teile der Anschlußlitze 11 von einem Litzenschutzelement 27 umgeben. Dieses Litzenschutzelement 27 besteht aus einem länglichen, U-förmigen Bodengehäuse 29, welches über die Anschlußlitze 11 stülp- und durch einen Deckel 31 verschließbar ist. Das Bodengehäuse 29 weist neben einem Kanalschacht 33 für die Anschlußlitze 11 mindestens einen Kanalschachtabschnitt 35 für einen einzelnen Anschlußlitz 37 auf, welches durch den die offene Längsseite des U-förmigen Bodengehäuses 29 verschließbaren Deckel 31 festklemmbar ist. Dieser Deckel 31 ist übrigens mittels Rastverbindungen mit dem Bodengehäuse 29 fest verbindbar. Übrigens sind der Deckel 31 und das Bodengehäuse 29 aus einem einstückigen Kunststoffteil hergestellt und über ein filmscharnierartiges Gelenk 39 fest miteinander verbunden. Der Kanalschachtabschnitt 35 ist zum Festklemmen des einen Anschlußlitzes 37 an einer Seite neben dem Kanalschacht 33 in dem Bodengehäuse 29 angeordnet und wird durch eine Seitenwand 41 des Bodengehäuses 29 und einer aufrecht auf der Bodenfläche 43 des Bodengehäuses 29 zwischen dem Kanalschachtabschnitt 35 und dem Kanalschacht 33 angeordneten Zwischenwand 45 gebildet. Die Bodenfläche 47 in dem Kanalschachtabschnitt 35 ist gegenüber der Bodenfläche 43 des Bodengehäuses 29 erhöht angeordnet und ist mit einer durch Längsrillen 55 gebildeten Profilierung versehen, wodurch eine sichere Fixierung des einzelnen, festzuklemmenden Anschlußlitzes 37 und damit des Litzenschutzelementes 27 erzielt wird.

Der das Bodengehäuse 29 verschließende Deckel 31 weist auf seiner Innenseite 49 einen aufrecht angeordneten und einen der Länge des Kanalschachtabschnittes 35 entsprechend ausgebildeten Drucksteg 51 auf, durch welchen der einzelne Anschlußlitz 37 in dem Kanalschachtabschnitt 35 beim Verschließen des Deckels 31 gegen das Bodengehäuse 47 festklemmbar ist. Um eine Beschädigung des festzuklemmenden Anschlußlitzes 37 zu verhindern, ist das freie Ende 53 des Drucksteges 51 abgerundet ausgebildet. In vorteilhafter Ausgestaltung sind der Kanalschachtabschnitt 35 und der Drucksteg 51 in Nähe der durch das filmscharnierartige Gelenk 39 verbundenen Seiten 41, 49 des Bodengehäuses 29 und des Deckels 31 angeordnet. Die Seitenwände 41, 59 des Bodengehäuses 29 weisen an den freien Enden 57, 58 von außen nach innen einspringede Anschlagflächen 61, 62, 63, 64 für Anschlagrandflächen 65, 66 des Deckels 31 auf. Der innere Rand 67 des Deckels 31 liegt hierbei an den Anschlagflächen 62, 64 an, wenn der Deckel 31 verschlossen ist. Hierdurch wird eine sichere Fixierung des Deckels 31 auf dem Bodengehäuse 29 gewährleistet.

Die Verrastung des Deckels 31 auf dem Bodengehäuse 29 erfolgt dadurch, daß das Bodengehäuse 29 an seiner dem filmscharnierartigen Gelenk 39 abgewandten Seitenwand 59 federnde Raststege 77, 78 mit Rastnasen 69, 70 auf, welche hinter Rastnasen 71, 72 von fest angeordneten Rasthaken 80, 82 an dem Deckel 31 verrastbar sind.

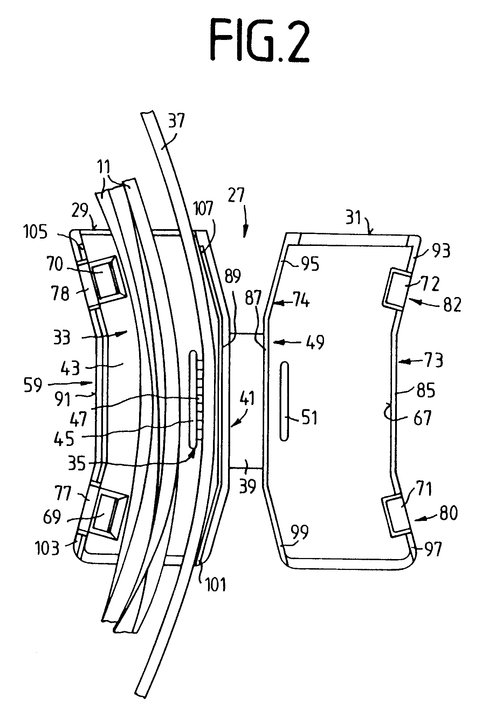

Gemäß der Figur 2 sind zwei feste Rasthaken 71, 72 an dem Deckel 31 und zwei federnde Raststege 77, 78 an dem Bodengehäuse 29 innenliegend in dem Litzenschutzelementgehäuse angeordnet. Durch diese innenliegende Verrastung kann es nicht zu einem Öffnen des Deckels 31 kommen, wenn z. B. die federnden Raststege 77, 78 mit ihren Rastnasen 69, 70 hinter einer Körperkante des Motorgehäuses unterhaken oder durch Rütteln aufgebogen werden würden. Die festen Rasthaken 71, 72 sind an der dem Gelenk 39 abgewandten Seitenwand 73 des Deckels 31 nach innen ragend und gegenüber dem inneren Rand 67 hervorstehend ausgebildet. Die Rastnasen 69, 71 sind an freien Enden von federnden Raststegen 77, 78 angeordnet, welche einstückig mit dem Boden 43 des Bodengehäuses 29 verbunden sind und zu der Seitenwand 41 des Bodengehäuses 29 einen Luftspaltabstand 79 bilden. Dieser Luftspaltabstand 79 ist etwas größer als die Breite der Rastnase 69, 70.

Um das Litzenschutzelement 27 wieder verwenden zu können, ist es erforderlich, daß die Rastverbindung zwischen dem Deckel 31 und dem Bodengehäuse 29 aufgehoben wird. Zu diesem Zweck weisen der Deckel 31 und das Bodengehäuse 29 in Fluchtrichtung der Rastnasen 69, 70 und der Rasthaken 71, 72 entsprechend groß ausgebildete Durchbrüche 81, 83 auf. Mittels eines durch die Durchbrüche 81, 83 hindurchsteckbaren Schraubendreher sind die federnden Raststege 77, 78 derart verschwenkbar, daß deren Rastnasen 69, 70 von den Rasthaken 71, 72 entwickelbar sind.

Die parallel zueinander angeordneten äußeren und inneren langen Seitenwände 73, 41, 59, 49 des Bodengehäuses 29 und des Deckels 31 weisen eine der Außenkontur des Lagerschildes 13 bzw. des Motorgehäuses 3 annähernd angepaßte Formen auf. Dieses wird dadurch erreicht, daß die äußeren und inneren langen Seitenwände 73, 41, 59, 49 des Bodengehäuses 29 und des Deckels 31 im mittleren Bereich aus geraden Seitenflächen 85, 87, 89, 91 bestehen, an welche sich zum Motorgehäuse 3 hin abgewinkelte Endseitenflächen 93, 95, 97, 99, 101, 103, 105, 107 anschließen. Hierdurch werden die Anschlußlitze 11 eng an dem Außenumfang des Motorgehäuses 3 entlanggeführt. Das filmscharnierartige Gelenk 39 ist übrigens mit den den langen geraden Seitenflächen 87, 89 des Bodengehäuses 29 und des Deckels 31 fest verbunden. Auch sind der Kanalabschnitt 35 und der Drucksteg 51 im Bereich der geraden äußeren langen Seitenflächen 87, 89 angeordnet.

Das erfindungsgemäße Litzenschutzelement 27 besteht aus einem einfachen und leicht zu montierenden Bauteil, das durch Klemmen nur einer Anschlußlitze bei der Montage des Litzenschutzelementes in seiner Lage axial fixiert wird. Auch kann das Litzenschutzelement 27 bei einer unterschiedlichen Anzahl von zu schützenden Anschlußlitzen eingesetzt werden. Ebenso können nachträglich noch Anschlußlitzen in das Litzenschutzelement 27 eingebracht werden, da die Litzen nach Öffnen des Deckels nur eingelegt werden müssen.

## Patentansprüche

1. Elektromotor, insbesondere Kommutatormotor mit einem außen an dem Motorgehäuse angeordneten kundenabhängigen Steckergehäuse, welches mit den Enden von mehreren von den Wicklungen, Kohlebürsten und sonstigen elektrischen Bauelementen kommenden Anschlußlitzen fest verbunden ist, wobei die Anschlußlitze lose gebündelt aus einer Öffnung des Motorgehäuses herausgeführt und außerhalb des Motorgehäuses von einem an diesem sich abstützenden Litzenschutzelement umgeben sind, **dadurch gekennzeichnet,** daß das Litzenschutzelement (27) aus einem länglichen, U-förmigen Bodengehäuse (29) mit in Längsrichtung durchgehenden Führungskanälen besteht, welches über die Anschlußlitze (11) stülpbar und durch einen Deckel (31) verschließbar ist, und daß in dem Bodengehäuse (29) neben dem Kanalschacht (33) für die Anschlußlitze (11) mindestens ein Kanalschachtabschnitt (35) für einen einzelnen Anschlußlitz (37) vorgesehen ist, welches durch die offene Längsseite des U-förmigen Bodengehäuses (29) verschließbaren Deckel (31) festklemmbar ist.

2. Elektromotor nach Anspruch 1 , **dadurch gekennzeichnet,** daß der Deckel (31) mittels Rastverbindungen mit dem Bodengehäuse (29) verbindbar ist.

3. Elektromotor nach Anspruch 1 oder 2, **dadurch gekennzeichnet,** daß der Deckel (31) und das Bodengehäuse (29) aus einem einstückigen Kunststoffteil bestehen und über ein filmscharnierartiges Gelenk (39) fest miteinander verbunden sind.

4. Elektromotor nach Anspruch 1, 2 oder 3, **dadurch gekennzeichnet,** daß der Kanalschachtabschnitt (35) zum Festklemmen des einen Anschlußlitzes (37) an einer Seite neben dem Kanalschacht (33) in dem Bodengehäuse (29) angeordnet ist, durch eine Seitenwand (41) des Bodengehäuses (29) und einer aufrecht auf der Bodenfläche (43) des Bodengehäuses (29) zwischen dem Kanalschachtabschnitt (35) und dem Kanalschacht (33) angeordneten Zwischenwand (45) gebildet wird und dessen Bodenfläche (47) gegenüber der Bodenfläche (43) des Bodengehäuses (29) erhöht angeordnet ist.

5. Elektromotor nach Anspruch 4, **dadurch gekennzeichnet,** daß die Bodenfläche (47) in dem Kanalschachtabschnitt (35) eine z. B. durch Längsrillen (55) gebildete Profilierung aufweist.

6. Elektromotor nach einem der vorhergehenden Ansprüche, **dadurch gekennzeichnet,** daß der das Bodengehäuse (29) verschließende Deckel (31) auf seiner Innenseite (49) einen aufrecht angeordneten und einen der Länge des Kanalschachtabschnittes (35) entsprechend ausgebildeten Drucksteg (51) aufweist, durch welchen der einzelne Anschlußlitz (37) in dem Kanalschachtabschnitt (35) beim Verschließen des Deckels (31) gegen das Bodengehäuse (47) festklemmbar ist.

7. Elektromotor nach Anspruch 6, **dadurch gekennzeichnet,** daß das freie Ende (53) des Drucksteges (51) abgerundet ausgebildet ist.

8. Elektromotor nach einem der vorhergehenden Ansprüche, **dadurch gekennzeichnet,** daß der Kanalschachtabschnitt (35) und der Drucksteg (51) in Nähe der durch das filmscharnierartige Gelenk (39) verbundenen Seiten (41, 49) des Bodengehäuses (29) und des Deckels (31) angeordnet sind.

9. Elektromotor nach Anspruch 8, **dadurch gekennzeichnet,** daß die Seitenwände (41, 59) des Bodengehäuses (29) an den freien Enden (57, 58) von außen nach innen einspringende Anschlagflächen (61, 62, 63, 64) für Auflagerandflächen (65, 66) des Deckels (31) aufweisen.

10. Elektromotor nach Anspruch 9, **dadurch gekennzeichnet,** daß das Bodengehäuse (29) an seiner dem filmscharnierartigen Gelenk (39) abgewandten Seitenwand (59) federnde Raststege (77, 78) mit Rastnasen (69, 70) aufweist, welche hinter Rastnasen (71, 72) von fest angeordneten Rasthaken (80, 82) an dem Deckel (31) verrastbar sind.

11. Elektromotor nach Anspruch 10, **dadurch gekennzeichnet,** daß zwei feste Rasthaken (71, 72) an dem Deckel (31) und zwei federnde Raststege (77, 78) an dem Bodengehäuse (29) innenliegend in dem Litzenschutzelement (27) angeordnet sind.

12. Elektromotor nach Anspruch 11, **dadurch gekennzeichnet,** daß die festen Rasthaken (71, 72) an der dem Gelenk (39) abgewandten Seitenwand (73) des Deckels (31) nach innen ragend und gegenüber dem inneren Rand (67) hervorstehend ausgebildet sind und daß die Rastnasen (69, 70) an freien Enden von federnden Raststegen (77, 78) angeordnet sind, welche einstückig mit dem Boden (43) des Bodengehäuses (29) verbunden sind und zu der Seitenwand (59) des Bodengehäuses (29) einen Luftspaltabstand (79) bilden, welcher etwas größer als die Breite der Rastnasen (69, 71) ist.

13. Elektromotor nach Anspruch 12, **dadurch gekennzeichnet,** daß der Deckel (31) und das Bodengehäuse (29) in Fluchtrichtung der Rastnasen (69, 70) und der Rasthaken (71, 72) entsprechend groß ausgebildete Durchbrüche (81, 83) aufweisen.

14. Elektromotor nach einem der vorhergehenden Ansprüche, **dadurch gekennzeichnet,** daß die parallel zueinander angeordneten äußeren und inneren langen Seitenwände (73, 41, 59, 49) des Bodengehäuses (29) und des Deckels (31) eine der Außenkontur des Lagerschildes (13) bzw. des Motorgehäuses (3) annähernd angepaßte Formen aufweisen.

15. Elektromotor nach Anspruch 14, **dadurch gekennzeichnet,** daß die äußeren und inneren langen Seitenwände (73, 41, 59, 49) des Bodengehäuses (29) und des Deckels (31) im mittleren Bereich aus geraden Seitenflächen (85, 87, 89, 91) bestehen, an welche sich zum Motorgehäuse (3) hin abgewinkelte Endseitenflächen (93, 95, 97, 99, 101, 103, 105, 107) anschließen.

16. Elektromotor nach Anspruch 15, **dadurch gekennzeichnet,** daß das filmscharnierartige Gelenk (39) mit den langen geraden Seitenflächen (87, 89) des Bodengehäuses (29) und des Deckels (31) verbunden ist.

17. Elektromotor nach Anspruch 15, **dadurch gekennzeichnet,** daß der Kanalschachtabschnitt (35) und der Drucksteg (51) im Bereich der geraden äußeren langen Seitenflächen (87, 89) angeordnet sind.
